# EUROPEAN PATENT APPLICATION

(11) **EP 1 720 178 A1**
(43) Date of publication of application: **08.11.2006**
(21) Application number: 05710049.7
(22) Date of filing: 10.02.2005
(51) Int. Cl.: H01F 1/26, B42D 15/10, G06K 19/07, G06K 19/077, H01F 1/44, H01Q 7/08

(54) **HIGH-FREQUENCY MAGNETIC CORE MATERIAL, ITS MANUFACTURING METHOD, AND ANTENNA WITH THE MAGNETIC CORE MATERIAL**

(30) Priority: 13.02.2004 JP 2004036065
(71) Applicant: MITSUBISHI MATERIALS CORPORATION, Chiyoda-ku, Tokyo 100-8117 (JP)
(72) Inventor: ENDO, Takanori, Mitsubishi Materials Corporation, Bunkyo-ku, Tokyo 112-0002 (JP); MORI, Tomohiro, Mitsubishi Materials Corporation, Bunkyo-ku, Tokyo 112-0002 (JP); YAHATA, Seirou, Mitsubishi Materials Corporation, Bunkyo-ku, Tokyo 112-0002 (JP)
(74) Representative: HOFFMANN EITLE
(86) International application number: PCT/JP2005/001997
(87) International publication number: WO 2005/078746

(57) **Abstract**

The invention provides a magnetic core material which has high magnetic permeability in a specific direction, and good dimensional accuracy, and is hard to be damaged, particularly a high-frequency magnetic core material which is suitable to be used for an antenna of an RFID tag or reader/writer which operates in a range of a VHF band to a UHF band. A soft magnetic metal powder having a predetermined particle size (about 1 µm) or less is kneaded with plastic or rubber in a volume ratio of about 10% to 50%, and preferably, in a content of 10% to 40%, and the kneaded composite is subjected to working which extends a composite material in one direction, such as extruding, rolling, rolling after extruding, drawing after extruding, or rolling after injection. As a result, the magnetic permeability can be enhanced, the direction dependency can be given to magnetic permeability, the dimensional accuracy can be improved, and the magnetic core material can be made hard to be damaged. Further, a high-performance antenna with little leakage of magnetic flux can be manufactured by forming an antenna pattern in one surface of this magnetic core material and disposing a conductive material on the other surface thereof to form an antenna of an RFID tag or reader/writer.

## Description

### Technical Field

The present invention relates to a magnetic core material, and particularly, to a high-frequency magnetic core material which is suitable to be used for an antenna of an RFID tag or an RFID reader/writer which operates in the range of a VHF band to a UHF band, its manufacturing method, and an antenna including the magnetic core material.

### Background Art

In recent years, an RFID system which communicates data between a tag including an IC chip, and a reader, a writer, or a reader/writer (hereinafter generically referred to as "reader/writer") has come into wide spread. Since this RFID system communicates data using antennas provided in the tag and the reader/writer, respectively, the system can communicate data even if the tag is separated away from the reader/writer, and the system has increasingly been used for various applications, such as production control in factories, control of commodity distribution, and entrance/exit control thanks to an advantage that the system is resistant against dirt, etc. (for example, JP-A No. 2003-249820 (Pages 4 to 8, Fig. 1), etc.).

In the RFID system, the communicable distance varies according to a frequency band to be used. In a range of a short wave band of, for example, about 13.56 MHz, the communication distance is several centimeters to tens of centimeters. If this system is used for an application, such as entrance/exit control, there is no practical problem in such a degree of communication distance since the tag is used in proximity to the reader/writer. However, a longer communication distance is advantageous for an application, such as commodity distribution control. Therefore, bands having a higher frequency, such as a VHF band and a UHF band, are used for such an application.

[Patent Document 1] Japanese Unexamined Patent Application Publication No. 2003-249820(Page4 to Page8, Fig.1)

### Disclosure of the Invention

### Problems to be Solved by the Invention

Generally, although an antenna in which a coil is wound around a magnetic core material is used as antenna for RFID tags and ferrite is known as a magnetic core material which can be used at high frequency, the conventional ferrite has the following problems.

A first problem is that, since a soft magnetic ferrite has isotropy, i.e., has the same magnetic permeability in a magnetizing direction of a magnetic core and in a direction orthogonal to the magnetizing direction, magnetic flux will leak from a side face of a magnetic core material. This leakage magnetic flux causes problems, such as performance degradation of the antenna, scattering of an unnecessary radio-wave noise to the surroundings in an inductor, etc.

Further, a second problem is that Ni-Cu-Zn ferrite which is available at high frequency, particularly in a range of a UFH band has low magnetic permeability, and a high-performance antenna is not obtained in a range of a high-frequency band.

Further, a third problem is that the above ferrite is generally manufactured by a sintering method, and if the ferrite is processed by this sintering method, its dimensional accuracy is bad because the ferrite shrinks/deforms during sintering, and expensive grinding is required to obtain a material whose surface is smooth and whose dimensional accuracy is good, and consequently the cost of an antenna will rise.

Further, a fourth problem is that, since an antenna for an RFID tag or reader/writer is attached to the surface of an article or a housing of an electronic circuit, it is also necessary to make a magnetic core material thin in order to avoid collision with other articles, but if the magnetic core material is made thin, the magnetic core material has a possibility of being damaged due to contact with other particles during the process of manufacturing an antenna, or after attachment to an apparatus, etc. because the ferrite is brittle.

Such problems are similarly caused not only in the magnetic core material to be used for an antenna for an RFID tag or reader/writer, but a magnetic core material to be used for other high-frequency antennas. Therefore, a high-frequency magnetic core material that has little leakage of magnetic flux, high magnetic permeability, and good dimensional accuracy, and is hard to be damaged is required.

The invention has been made in consideration of the above problems. The principal object of the invention is to provide a magnetic core material which has high magnetic permeability in a specific direction, and good dimensional accuracy, and is hard to be damaged, particularly a high-frequency magnetic core material which is suitable to be used for an antenna of an RFID tag or reader/writer which operates in a range of a VHF band to a UHF band, its manufacturing method, and an antenna including the magnetic core material.

### Means for Solving the Problems

In order to achieve the above object, the magnetic core material of the invention is a magnetic material including a composite material of a soft magnetic metal powder and plastic or rubber. The soft magnetic metal powder is concatenated by spontaneous magnetization to form a plurality of aggregates, and the longitudinal direction of each aggregate faces a substantially fixed direction.

Further, the magnetic core material is a magnetic core material including a composite material of a soft magnetic metal powder having a diameter of about µm or less and plastic or rubber. The soft magnetic metal powder is concatenated by spontaneous magnetization to form a plurality of aggregates, and the longitudinal direction of each aggregate faces a substantially fixed direction.

In the invention, preferably, the volume ratio of the soft magnetic metal powder is in a range of about 10% to 50%, or in a range of about 10% to 40%.

Further, in the invention, the soft magnetic metal powder can be a configuration including any one of a nickel powder, a cobalt powder, and an iron powder which are obtained by reducing an oxide, a configuration including any one of a nickel powder, a cobalt powder, and an iron powder by using a gas phase method, a configuration including any one of a nickel powder, a cobalt powder, and an iron powder which are obtained by reducing a solution containing metallic ions, or a configuration including a carbonyl nickel powder or a carbonyl iron powder.

Further, the antenna of the invention is an antenna in which a spiral conductor pattern is formed on one surface of the magnetic core material worked in the form of a plate.

Further, the antenna of the invention is an antenna in which a spiral conductor pattern is formed on one surface of the magnetic core material worked in the form of a plate, and a conductive material is disposed on the other surface of the magnetic core material.

In the invention, the plate-like magnetic core material can consist of a plurality of magnetic core material pieces in which the longitudinal directions of the aggregates of the soft magnetic metal powder are different from each other.

Further, in the invention, the antenna can be configured such that the conductor pattern is formed in a rectangular shape, and the plate-like magnetic core material is disposed so as to be overlapped with only one side or two opposite sides of the rectangular conductor pattern, as viewed from a direction orthogonal to a surface of the plate-like magnetic core material.

Further, the antenna of the invention is an antenna in which a leading wire is wound around the magnetic core material worked in the form of a plate such that the magnetic axis of the magnetic core material may substantially coincide with the longitudinal directions of the aggregates of the soft magnetic metal powder.

Further, in the invention, the antenna can be an antenna which is used for an RFID tag or an RFID reader/writer which uses at least a VHF band or a UHF band as a communication frequency.

Further, the method of manufacturing a magnetic core material of the invention is a method of manufacturing a magnetic core material using a composite material of a soft magnetic metal powder and plastic. The method includes heating and kneading the soft magnetic metal powder and the plastic and thereafter working the kneaded composite by using any one method of extruding, rolling, rolling after extruding, drawing after extruding, and rolling after injection so that the longitudinal directions of a plurality of aggregates formed by concatenating the soft magnetic metal powder by spontaneous magnetization may face a substantially fixed direction.

Further, the method of manufacturing a magnetic core material of the invention is a method of manufacturing a magnetic core material using a composite material of a soft magnetic metal powder and plastic. The method includes applying a direct-current magnetic field after a film is coated with ink in which the soft magnetic metal powder is suspended in a solvent which has dissolved the plastic and before the coated film is dried so that the longitudinal directions of a plurality of aggregates formed by concatenating the soft magnetic metal powder by spontaneous magnetization may be aligned in a substantially fixed direction.

In this way, according to the invention, since a magnetic core material is manufactured using a composite material in which a soft magnetic metal powder below a predetermined particle size and plastic or rubber are mixed together in a predetermined ratio, the magnetic permeability can be enhanced, the dimensional accuracy can be improved, and the magnetic core material can be made hard to be damaged even if thin. Further, since working which extends a composite material in one direction is carried out so that a soft magnetic metal powder may continue in a predetermined direction, the direction dependency can be given to magnetic permeability. Further, if a direct-current magnetic field is applied to a film after the film is coated with ink in which a soft magnetic metal powder is suspended in a solvent which has dissolved plastic and before the coated film is dried, the aggregates of the soft magnetic metal powder can be aligned surely in a direction of magnetic flux. Also, a high-performance antenna with little leakage of magnetic flux can be manufactured by using such a magnetic core material for an antenna of an RFID tag or reader/writer.

### Effect of the Invention

As described above, according to the magnetic core material, its manufacturing method, and the antenna including the magnetic core material of the invention, the following effects can be exhibited.

A first effect of the invention is that the magnetic permeability of the magnetic core material can be enhanced, the dimensional accuracy can be improved, and the magnetic core material can be made hard to be damaged if thin.

This is because the magnetic core material is formed using a composite material in which a soft magnetic metal powder below a predetermined particle size and plastic or rubber are mixed together in a predetermined ratio.

Further, a second effect of the invention is that the direction dependency can be given to the magnetic permeability of the magnetic core material.

This is because, when the composite material is worked, the composite material is extended in one direction so that a soft magnetic metal powder may continue in a predetermined direction, or a direct-current magnetic field is applied to a film after the film is coated with ink in which a soft magnetic metal powder is suspended and before the coated film is dried.

Further, a third effect of the invention is that a high-performance antenna for a RFID tag or reader/writer which operates in a range of a VHF band to a UHF band can be manufactured.

This is because leakage of magnetic flux can be suppressed by using the composite material as a magnetic core of an antenna for a tag, a reader or a reader/writer of an RFID system.

### Brief Description of the Drawings

Fig. 1 is a view schematically showing the general configuration of an RFID system.
Figs. 2A and 2B are respectively a top view and a side view schematically showing the configuration of an antenna according to an example of the invention.
Figs. 3A to 3C are perspective views schematically showing a method of manufacturing a magnetic core material and the sectional structure thereof according to an example of the invention.
Fig. 4 is a view showing the configuration of a conventional antenna with no magnetic core material.
Fig. 5 is a view showing the configuration of an antenna including the magnetic core material according to an example of the invention.
Fig. 6 is a view showing another configuration of the magnetic core material according to an example of the invention.
Fig. 7 is a view showing another configuration of the antenna including the magnetic core material according to an example of the invention.
Fig. 8 is a view showing another configuration of the antenna including the magnetic core material according to an example of the invention.
Figs. 9A and 9B are views showing a further configuration of the antenna including the magnetic core material according to an example of the invention.
Figs. 10A and 10B are respectively a top view and a side view schematically showing the configuration of the conventional antenna.

### Reference Numerals

- 1:: RFID SYSTEM
- 2:: TAG
- 3:: ANTENNA
- 4:: CAPACITOR
- 5:: IC CHIP
- 6:: READER/WRITER
- 7:: ANTENNA FOR READER/WRITER
- 8:: CONTROL UNIT
- 8a:: COMMUNICATION CIRCUIT
- 8b:: ARITHMETIC PROCESSING CIRCUIT
- 9:: COIL
- 10:: MAGNETIC CORE MATERIAL
- 11:: MAGNETIC FLUX
- 12:: METALLIC ARTICLE
- 12a:: ALUMINUM BOARD
- 13:: CIRCUIT
- 14:: BASE
- 15:: SPACER

### Best Mode for Carrying out the Invention

As shown in the related art, the ferrite is generally used as a magnetic core material. In this case, there are problems in that, since the soft magnetic ferrite is isotropic, magnetic flux leaks from a side face of the magnetic core material, and the performance of an antenna degrades due to this leakage magnetic flux, and the Ni-Cu-Zn ferrite which is available at high frequency, particularly in a range of a UFH band, has low magnetic permeability. Further, the above ferrite is manufactured by a sintering method. In this case, there are also problems in that, since the ferrite shrinks/deforms during sintering, the dimensional accuracy is low, and since the ferrite is brittle, the magnetic core material is easily damaged during manufacture or handling of an antenna.

With respect to such problems, the inventors of the present application disclose a technique of using a soft magnetic alloy powder or a composite material of flakes and plastic in JP-A No. 2002-215321. By using the composite material described in this publication, a magnetic core material which is flexible, is hard to be split and has good dimensional accuracy can be formed. However, although this composite material has a good property for the frequency of 13.56 MHz, the material cannot be used at a frequency exceeding 40 MHz because the loss increases. Further, since flakes are recombined together even if the above magnetic core material is pulverized by an attritor for a long time when being manufactured, there is a limitation to acquisition of a fine powder. As a result, a composite material which can be used at a frequency which is higher than 40 MHz cannot be manufactured.

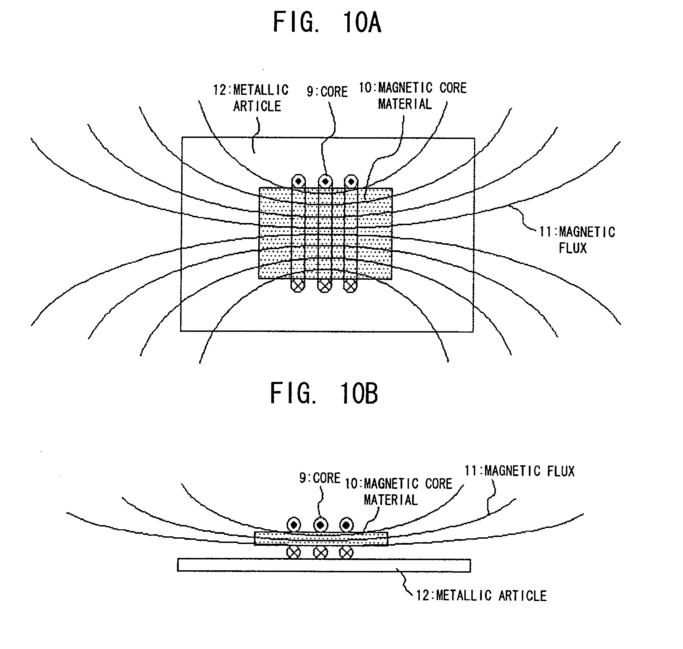

Further, since a composite material using powder is isotropic, leakage of magnetic flux is caused in a direction orthogonal to a magnetizing direction like the ferrite. For example, as shown in Fig. 10, magnetic flux 11 leaks out from a side face (up-and-down direction of Fig. 10A) and front and back faces (up-and-down direction of Fig. 10B) of a magnetic core material 10. Further, although the composite material rolled using flakes has a lower magnetic permeability in a thickness direction than that in a rolling direction, the magnetic permeability of the side face orthogonal to the rolling direction is almost equal to the magnetic permeability in the rolling direction. Thus, leakage of the magnetic flux 11 from the side face (up-and-down direction of Fig. 10A) cannot also be suppressed. And, if the magnetic flux 11 leaks out from the upper and lower faces or side face of the magnetic core material, the performance of an antenna will degrades because the effective length of a magnetic core decreases.

Therefore, in order to eliminate the drawbacks of the above conventional magnetic core material, according to the invention, an extremely fine soft magnetic metal power as shown below is used, the soft magnetic metal powder is made composite with plastic or rubber, and the resulting composite is subjected to working which extends a material in one direction, such as extruding, rolling, rolling after extruding, drawing after extruding, or injection after rolling. Further, a direct-current magnetic field is applied to a film after the film is coated with ink in which a soft magnetic metal powder is suspended in a solvent which has dissolved plastic and before the coated film is dried.

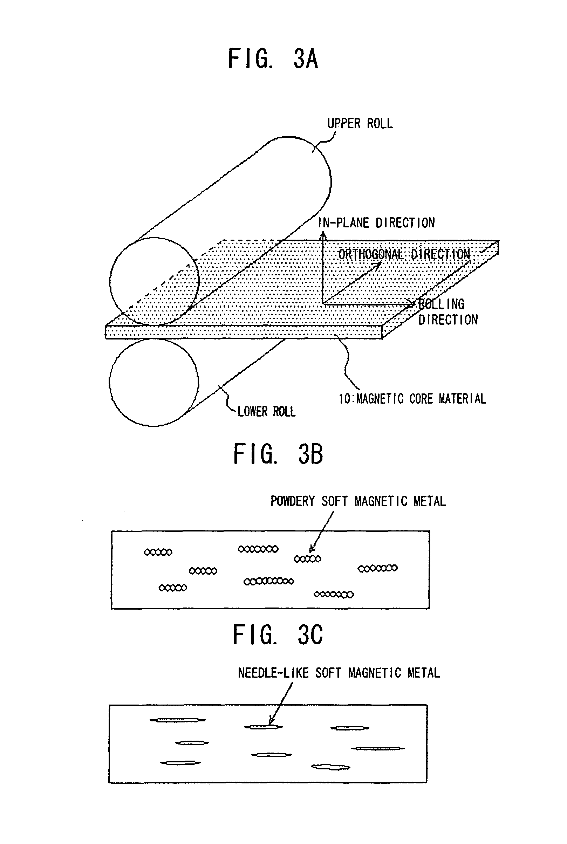

This extremely fine soft magnetic powder is concatenated for spontaneous magnetization. If this soft magnetic powder is made composite with plastic or rubber, and the resulting composite is extended in one direction, or a direct-current magnetic field is applied to a film which is coated with ink in which a soft magnetic metal powder is suspended, as shown in Fig. 3B, concatenated powder aggregates will be arranged in the extended direction. And, if the magnetic field is applied in a direction in which the material is extended, magnetic permeability in the extended direction can be made high as magnetic flux passes through the concatenated powder aggregates. On the other hand, since the powder is not concatenated in the direction orthogonal to the extended direction, the magnetic permeability is low, and since the powder is fine, there is no influence of an eddy current which flows through the powder. Accordingly, if the content of the powder is adjusted so that the power aggregates may not be connected mutually in the direction orthogonal to the magnetizing direction, it becomes possible to use the magnetic core material for the high frequency exceeding 40 MHz. As such a powder, the following powders are suitable.

### 1. Powder Obtained by Reduction of Metallic Oxide

For example, there are a nickel powder, a cobalt powder or an iron powder which is obtained by reducing a fine oxide which is obtained by pyrolyzing an organic acid salt, such as an oxalic acid of a metal, such as nickel, cobalt, or iron, at low temperature using hydrogen, a fine iron powder which is obtained by neutralizing and oxidizing a ferrous sulphate solution, and the like.

### 2. Powder Obtained by Gas Phase Method

There is a nickel powder, a cobalt powder, an iron powder, etc. which is obtained by heating and vaporizing a metal, such as nickel, cobalt, or iron, under reduced pressure, and solidifying the heated and vaporized metal in a gaseous phase.

### 3. Powder Reduced in Solution

There is a nickel powder, a cobalt powder, etc. which are obtained by hydrogen-reducing a solution including ammonia complex ions of nickel or cobalt at high temperature and high pressure.

### 4. Carbonyl Nickel Powder and Carbonyl Iron Powder

There are a carbonyl nickel powder, a carbonyl iron powder, etc. which are obtained by pyrolyzing nickel carbonyl (Ni(CO)₄) and ferrous carbonyl (Fe(CO)₅).

Since such powders are extremely fine, protective layers, such as an oxidizing layer and an organic compound, are provided in the surface to prevent firing in atmospheric air. However, since powder particles are in contact with one another in these protective layers, it is not possible to prevent an eddy current from flowing between the powder particles. Therefore, since the powder particles are prevented from directly contacting one another, it is preferable that the content of the powder be less than 40% in a volume ratio (hereinafter referred to as 40 v%). In addition, although the specific resistance of these materials is small, an eddy current does not flow if there is no mutual contact between powder particles because the size of the powder particles is also small. Further, since a material having less content of powder is easy in terms of working, such as rolling, and the resulting composite material is also flexible, the content may be reduced suitably in a case where an antenna is required to be bent for attaching the antenna to a curved surface, or winding and conveying the antenna, etc. On the other hand, since the magnetic permeability will fall if the content of Powder Decreases, it is not appropriate that the content of the powder is less than 10 v%.

Further, even if the powder having the above protective layers is handled in atmospheric air, it does not fire, but long-term oxidation thereof cannot be prevented. However, when a powder is used as a composite material of the powder and plastic, the plastic cuts off contact between the powder and atmospheric air. Thus, the composite material of the invention also has an effect that deterioration caused by oxidation can be prevented.

And, after the powder having the above content is heated and kneaded with polyethylene, polypropylene, nylon, vinyl chloride, fluorine resin, etc., the kneaded composite is subjected to working which extrudes a material in one direction, such as extruding, rolling, or rolling of an extruded material. Further, a direct-current magnetic field is applied to a film after the film is coated with ink in which the above powder is suspended in a solvent which has dissolved plastic and before the coated film is dried. Although the above fine powder particles are spherical, and the particles are attracted to one another and concatenated by spontaneous magnetization thereof, they can be aligned in a direction in which powder aggregates are extended by extending plastic including the power particles in one direction, or applying a direct-current magnetic field.

As for the magnetic core material manufactured as such, the magnetic permeability in the extended direction is high, and the magnetic permeability in the direction orthogonal to the extended direction is low. Accordingly, if a coil is wound so that a direction with high magnetic permeability becomes the direction of a magnetic component, magnetic flux does not leak from upper and lower faces or a side face, but comes out from an end face completely. Therefore, if this magnetic core material is used, it is possible to manufacture an antenna for a thin RFID tag or reader/writer which operates in a range of a VHF band to a UHF band, and which is used in close contact with a metallic article.

In addition, the above-mentioned materials and manufacturing method are just illustrative, and other materials and manufacturing methods can also be used as long as a magnetic core material which has high permeability and good dimensional accuracy, and is hard to be damaged, can be manufactured.

### Examples

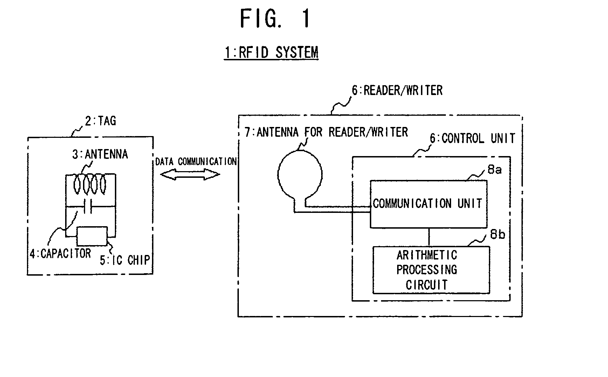

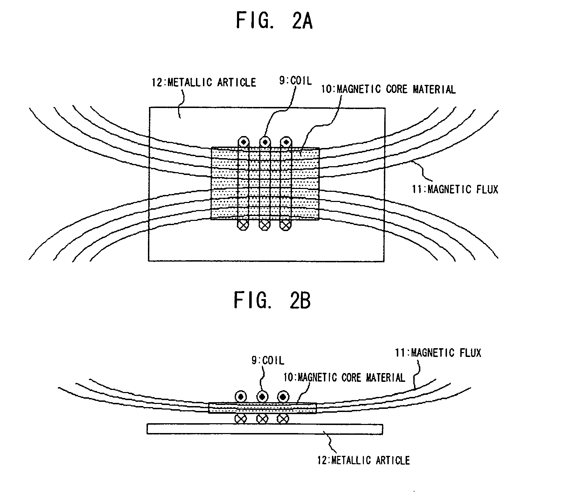

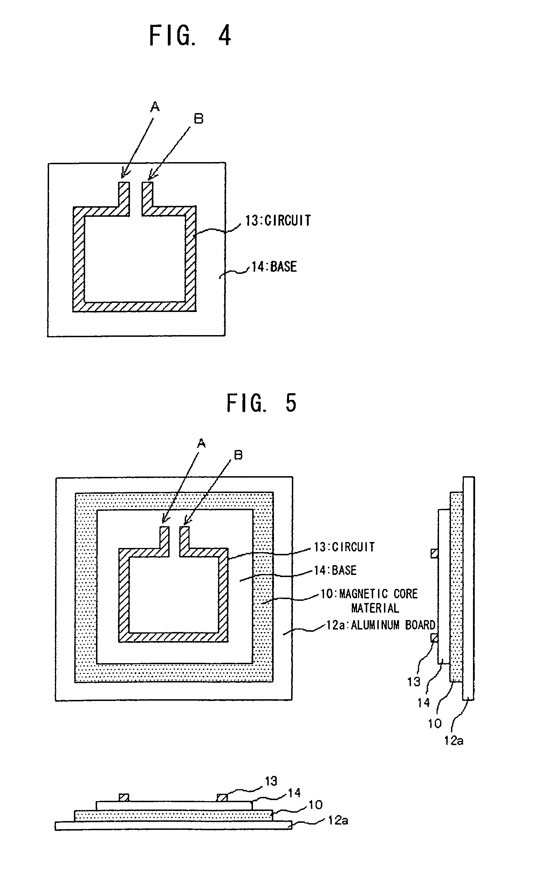

In order to describe the above-mentioned embodiment of the invention in more detail, examples in which the magnetic core material of the invention is applied to an antenna for an RFID tag or reader/writer with reference to Figs. 1 to 9. Fig. 1 is a view schematically showing the general configuration of an RFID system, and Fig. 2 is a view schematically showing the configuration of an antenna of this example. Further, Fig. 3 is a view schematically showing a manufacturing method and a sectional structure of a magnetic core material of this example, and Fig. 4 is a view showing the configuration of a conventional antenna. Further, Figs. 5 to 9 are views showing variations of the configuration of the antenna of this example. In addition, although a case where the magnetic core material of the invention is applied to an antenna for tags is shown below, the invention is not limited to the following examples, and the magnetic core material of the invention may be applied to an antenna for a reader/writer.

As shown in Fig. 1, an RFID system 1 of this example is composed of a tag 2 and a reader/writer (or reader) 6 which communicate data using frequency bands, such as a UHF band or an SHF band. The tag 2 has an antenna 3 and a capacitor 4 (it is not necessarily required in a case where a capacitor is built in the IC chip 5) which constitute a resonant circuit, and an IC chip 5 which stores information. The reader/writer (or reader) 6 has an antenna 7 for a reader/writer which communicates with the antenna 3 of the tag 2, and a control units 8 composed of a communication circuit 8a for converting transmission and reception signals, and an arithmetic processing circuit 8b for decoding the transmission and reception signals. The tag 2 is driven using power supplied from a built-in power source or the reader/writer 6. Communication of data is performed by tuning the resonant frequency of the tag 2 and the antenna 7 for a reader/writer to a carrier frequency.

The antenna (here, the antenna 3 for the tag 2) of this RFID system 1, as shown in Fig. 2, is configured such that a coil 9 is wound around a magnetic core material 10 including a composite material that is the feature of the invention. This antenna is installed on the surface of an article or a housing, particularly on an article a housing (metallic article 12) including a metallic material.

As described above, the magnetic core material 10 is manufactured by making an extremely fine soft magnetic metal powder composite with plastic or rubber, and subjecting the resulting composite to working which extends a material in one direction, such as extruding or rolling. Therefore, powder aggregates concatenated by spontaneous magnetization can be arranged in the extended direction, the magnetic permeability in the extended direction can be made high, the magnetic permeability in the direction orthogonal to the extended direction can be made low (refer to Fig. 3B). Accordingly, by disposing the magnetic core material 10 so that the extended direction of the composite material may coincide with the direction of the magnetic axis of a coil, the magnetic flux 11, as shown in Fig. 2, can come out only from an end face (right-and-left direction of Fig. 2) of the magnetic core material 10, without leaking out from the side face (up-and-down direction of Fig. 2A) and front and back faces (up-and-down direction of Fig. 2B) of the magnetic core material. This can suppress a decrease in the effective length of a magnetic core, and improve the performance of an antenna when the magnetic core material is used as the antenna. Further, the magnetic flux 11 is kept from leaking out from the front and back faces (up-and-down direction of Fig. 2B), so that the antenna can be made to be operated even if it is directly placed on the metallic article 12.

Although the direction dependency of the above-described magnetic permeability appears even in extruding and rolling, the difference of the magnetic permeability becomes more remarkable if an extruded material is rolled or an extruded material is drawn. Further, as a method of obtaining the above direction dependency, a method of forming fine needlelike magnetic bodies, and subjecting the needlelike magnetic bodies to working, such as extruding or rolling, so that they may be arranged in a fixed direction, can also be used (refer to Fig. 3C), in addition to a method of extending extremely fine power in chains in a fixed direction. Further, a method of applying a direct-current magnetic field is applied to a film after the film is coated with ink in which the above powder is suspended in a solvent which has dissolved plastic and before the coated film is dried, can be used. In addition, although the direction dependency of the magnetic permeability cannot be obtained only by dispersing extremely fine powder uniformly, it is possible to form an antenna which operates at least at high frequency, such as a VHF band to a UHF band.

Further, in a case where the metallic article 12 is made of nonmagnetic substance, such as aluminum, magnesium, and copper alloy, an antenna can be directly disposed on the metallic article 12. However, in a case where the metallic article 12 is an iron plate, the loss increases. In that case, a conductive material, such as aluminum, pure copper, and brass, can also be interposed between an antenna and the metallic article 12. Such configuration makes it possible to stably operate an antenna irrespective of the kind of a metallic material which constitutes the metallic article 12. Although the thickness of the conductive material is set to about 1 µm to 1 mm, and preferably, about 10 µm to 20 µm, the thickness may be set to about 0.05 mm to 0.5 mm in a case where a function as a structural material is also given to the conductive material.

Further, a member obtained by slitting this material into a tape and winding the tape into a coil can also be used as a magnetic core of an inductor. In this case, if the magnetic permeability in a longitudinal direction (rolling direction) is made high and the magnetic permeability in a direction (the side face and the thickness direction of the tape) orthogonal to the longitudinal direction is made low, the leakage magnetic flux of the coil will decrease.

Next, in order to specify the preferable diameter of a soft magnetic metal powder, content, and a method of working a composite material, the magnetic core material 10 was manufactured using Powders A to E shown below, and experiments shown in Examples 1 to 25 and Comparative Examples 1 to 12 were carried out. The experiment method and results will now be described.

Powder A: cobalt powder obtained by reducing an oxide with a mean diameter of 0.8 to 1 µm,
Powder B: carbonyl nickel powder with a mean diameter of 0.2 to 0.5 µm,
Powder C: carbonyl iron powder with a mean diameter of 0.8 to 1 µm,
Powder D: water-atomized alloy iron powder which contains 10% silicon, and whose 90 weight % or more is 20 µm or less, and
Powder E: Flakes which are obtained by making Powder D flat by the attritor and whose 90 weight % or more is 10 µm or less in thickness.

1. Direction Dependency at 15 MHz when Kind of Powder of Rolling Material is Changed
   Powers A, B, C, D, and E having the content of about 38 v% (85.5 weight %, hereinafter referred to as w%) were kneaded with nylon and rolled to form plates having the thickness of 0.5 mm, and the magnetic permeability (µ) and the Q value at 15 MHz were measured with respect to three directions, i.e., the rolling direction, the direction orthogonal to the rolling direction, and the in-plane direction, which are shown in Fig. 3A (Examples 1 to 3, and Comparative Examples 1 and 2). The results are shown in Table 1.

**[Table 1]**

| | | Example 1 | Example 2 | Example 3 | Comparative Example 1 | Comparative Example 2 |
|---|---|---|---|---|---|---|
| Powder | | A | B | C | D | E |
| W% | | 85.5 | 85.5 | 84 | 80 | 80 |
| (V%) | | 38 | 38 | 38.3 | 38.1 | 38.1 |
| µ | Rolling Direction | 25 | 20 | 30 | 20 | 43 |
| | Orthogonal Direction | 1.3 | 1.0 | 15 | 20 | 42 |
| | In-plane Direction | 3 | 4 | 5 | 20 | 1.9 |
| Q | Rolling Direction | 50 | 65 | 45 | 60 | 27 |
| | Orthogonal Direction | 55 | 65 | 56 | 60 | 28 |
| | In-plane Direction | 53 | 62 | 58 | 60 | 30 |

As can be seen from Table 1, in Examples 1 to 3, the magnetic permeability only in the rolling direction is high and the magnetic permeability in the orthogonal direction and the in-plane direction is low. On the other hand, in Comparative Example 1, there is no difference of the magnetic permeability in the rolling direction, the orthogonal direction, and the in-plane direction, and in Comparative Example 2, the magnetic permeability in the rolling direction and the orthogonal direction is high, but there is no difference of the magnetic permeability. Accordingly, although the direction dependency of magnetic permeability is not obtained in the magnetic core material formed of Powder D whose particle size is 20 µm, and Powder E whose thickness of flakes is 10 µm, sufficient direction dependency sufficient is obtained in Powers A to C whose particle sizes are 0.2 µm to 1 µm. Therefore, in order to obtain the direction dependency of magnetic permeability, it is proven that the powder particle size is preferably set to be 1 µm or less. In addition, in both Examples 1 to 3 and Comparative Examples 1 to 2, the Q value in the rolling direction is in an available range.

### 2. Frequency Characteristic when Kind of Powder of Rolling Material is Changed

As for the magnetic core materials of Examples 1 to 3 and Comparative Examples 1 to 2, frequency was changed in a range of 10 MHz to 1000 MHz, to measure µ in the rolling direction and a Q value (Examples 4 to 6, Comparative Examples 3 to 4). The results are shown in Table 2. In addition, the reason why V% is changed even if W% is the same is that a powder varies in density depending on its composition.

**[Table 2]**

| | Example 4 | | Example 5 | | Example 6 | | Comparative Example 3 | | Comparative Example 4 | |
|---|---|---|---|---|---|---|---|---|---|---|
| Powder | A | | B | | C | | D | | E | |
| W% | 85.5 | | 85.5 | | 84 | | 80 | | 80 | |
| (V%) | 38 | | 38 | | 38.3 | | 38.1 | | 38.1 | |
| MHz | µ | Q | µ | Q | µ | Q | µ | Q | µ | Q |
| 10 | 25 | 50 | 20 | 65 | 35 | 70 | 20 | 65 | 43 | 35 |
| 15 | 25 | 50 | 20 | 65 | 35 | 70 | 20 | 60 | 43 | 27 |
| 20 | 25 | 50 | 20 | 65 | 35 | 70 | 20 | 48 | 43 | 22 |
| 40 | 25 | 50 | 20 | 65 | 35 | 69 | 20 | 35 | 42 | 8 |
| 60 | 25 | 50 | 20 | 60 | 35 | 50 | 20 | 15 | 40 | 5 |
| 80 | 25 | 48 | 20 | 55 | 30 | 35 | 19 | 8 | 35 | 2 |
| 100 | 25 | 45 | 20 | 40 | 25 | 30 | 19 | 3 | 20 | 1 |
| 200 | 24 | 40 | 20 | 35 | 12 | 10 | 15 | 1 | | |
| 400 | 23 | 35 | 18 | 30 | 7 | 2 | | | | |
| 600 | 19 | 22 | 15 | 15 | 5 | 1 | | | | |
| 1000 | 15 | 15 | 10 | 10 | | | | | | |

From Table 2, if frequency exceeds 100 MHz in Example 4, magnetic permeability will begin to fall and it will fall to 15 at 1000 MHz. However, as compared with the magnetic permeability (7) of Ni-Cu-Zn ferrite available the frequency, the magnetic permeability of Example 4 is maintained at twice or more the above value. Further, Example 5 is almost the same as Working Example 4. In both Examples 4 and 5, the Q value is maintained at an available range (10 or more) in the tested range. Further, in Working Example 6, if frequency is 100 MHz or less, the magnetic permeability is higher than those of Examples 4 and 5, and the Q value is also in an available range. On the other hand, in Comparative Example 3, if frequency exceeds 20 MHz, the Q value becomes 10 or less, and in Comparative Example 4, if frequency exceeds 60 MHz, the Q value becomes 10 or less. As a result, Comparative Examples 3 and 4 cannot be used. From the above results, if powder with a particle size of 1 µm or less is used, a magnetic core material which has sufficient magnetic permeability and Q value even at a high frequency band can be manufactured.

### 3. Test When Content of Magnetic Powder is Changed

µ and Q value of a magnetic core material obtained by kneading Powder A with nylon while its content is changed and rolling the kneaded composite were measured at 15 MHz (Examples 7 to 16, Comparative Examples 5 to 10). The results are shown in Table 3.

**[Table 3]**

| | Power Content | | Magnetic Property | |
|---|---|---|---|---|
| | W% | V% | µ | Q |
| Comparative Example 5 | 30 | 4.3 | 1.8 | 45 |
| Comparative Example 6 | 40 | 6.5 | 2.7 | 50 |
| Comparative Example 7 | 50 | 9.4 | 4.1 | 55 |
| Example 7 | 60 | 13.5 | 6.2 | 58 |
| Example 8 | 70 | 19.5 | 9.5 | 60 |
| Example 9 | 75 | 23.7 | 12.2 | 60 |
| Example 10 | 80 | 29.3 | 16.3 | 61 |
| Example 11 | 85 | 37 | 23.1 | 63 |
| Example 12 | 86 | 38.9 | 25 | 65 |
| Example 13 | 87 | 41 | 27.3 | 15 |
| Example 14 | 88 | 43.2 | 29.8 | 12 |
| Example 15 | 89 | 45.7 | 36.7 | 11 |
| Example 16 | 90 | 47.8 | 40.2 | 10 |
| Comparative Example 9 | 91 | 50.1 | 47 | 5 |
| Comparative Example 10 | 92 | 52.7 | 32 | 1 |

| | | | | |
|---|---|---|---|---|
| Measurement Frequency: 15 MHz | | | | |

From Table 3, the magnetic permeability of Comparative examples 5, 6, and 7 is low, whereas the magnetic permeability of Examples 7 to 16 increases as the content of a powder increases. Further, the Q value increases until the content of the powder reaches 40 V% and abruptly decreases if the content of powder exceeds 40 V%, but it is maintained at 10 or more that is an available range until the content of powder become 50 V%. On the other hand, in Comparative Examples 9 and 10, if the content of powder exceeds 50 V%, the Q value falls further. As a result, the comparative examples cannot be used. It can be said from the above that it is appropriate that the content of powder is 50% or less, and it is appropriate that the content of power is 40% or less in order to suppress the above-mentioned problem caused by the mutual contact between powder particles.

### 4. Test When Working Method is Changed

Magnetic core materials were manufactured using methods, such as extruding, rolling, drawing, and injection, and µ and Q value at 15 MHz were measured (Examples 17 to 21, Comparative Example 11). The results are shown in Table 4.

**[Table 4]**

| | | Example 17 | Example 18 | Example 19 | Example 20 | Example 21 | Comparative Example 11 |
|---|---|---|---|---|---|---|---|
| Working | | Extruding | Rolling | Rolling after Extruding | Drawing after Extruding | Rolling after Injection | Injection |
| µ | Rolling Direction | 23 | 25 | 26 | 28 | 25 | 20 |
| | Orthogonal Direction | 10 | 13 | 10 | 8 | 13 | 19 |
| | In-plane Direction | 10 | 3 | 3 | 8 | 3 | 19 |
| Q | Rolling Direction | 60 | 65 | 65 | 62 | 55 | 55 |
| | Orthogonal Direction | 60 | 65 | 65 | 62 | 55 | 55 |
| | In-plane Direction | 60 | 62 | 60 | 60 | 55 | 55 |

From Table 4, there is little difference of magnetic permeability depending on a direction in injection of Comparative Example 11. On the other hand, in Example 17, the magnetic permeability is high in the extruding direction (rolling direction), and the magnetic permeability is low in the direction (orthogonal direction or in-plane direction) orthogonal to the extruding direction. In Example 18, the magnetic permeability is high in the rolling direction, the magnetic permeability is slightly high in the in-plane direction orthogonal to the rolling direction, and the magnetic permeability is extremely low in the in-plane direction. Further, in Example 19, if rolling is performed after extrusion, the magnetic permeability in the rolling direction increases slightly more than a case where only rolling is performed, and the magnetic permeability in the orthogonal direction falls slightly. Further, in Example 20, if drawing is performed after extrusion, the magnetic permeability in the drawing direction increases, and the magnetic permeability in the drawing direction orthogonal to the drawing direction falls. Further, in Example 21, the property of the material which was rolled after injection was almost the same as a case where only rolling is performed. From the above results, as a working method for giving the direction dependency of magnetic permeability, extruding, rolling, rolling after extruding, drawing after extruding, or rolling after injection can be used, and particularly, rolling after extruding or drawing of extruding is preferable. In addition, in Examples 19 to 21, easiness in manufacture other than an improvement in property can also be expected.

### 5. Example of Trial Manufacture of Antenna

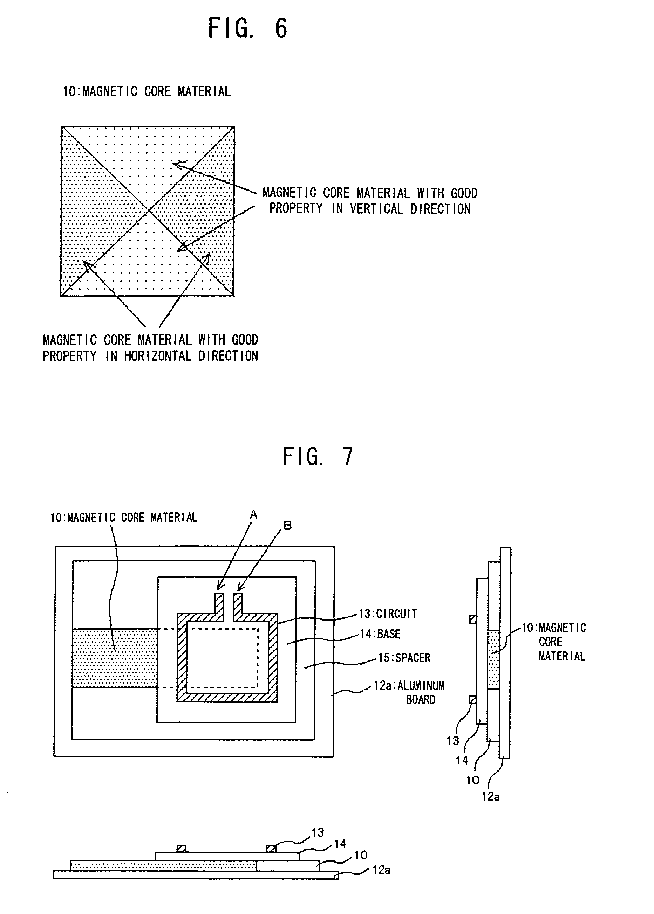

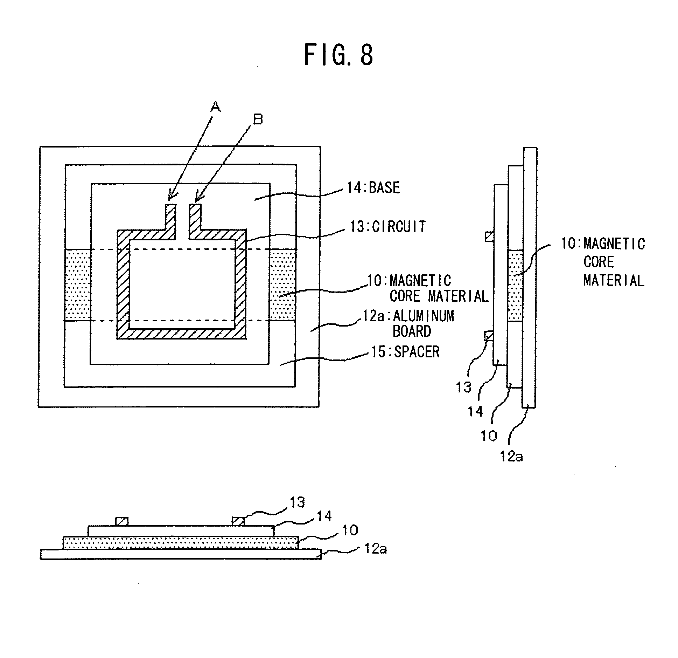

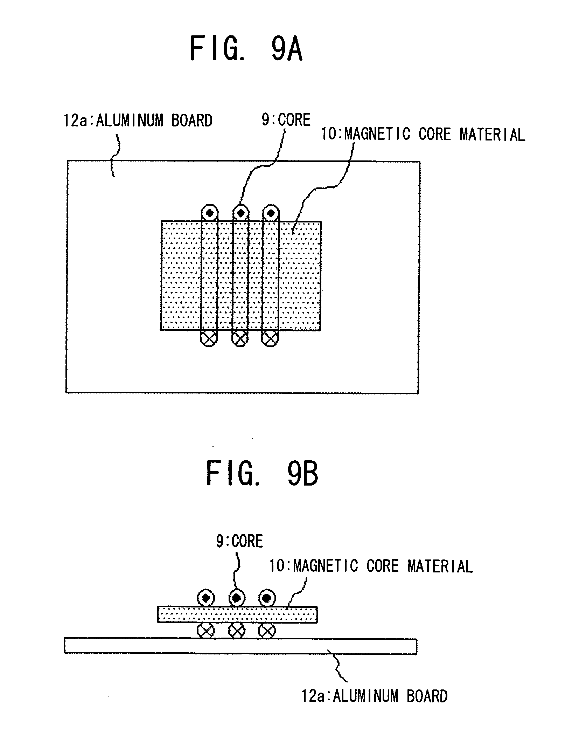

As Comparative Example 12, an antenna with no magnetic core in which only a circuit 13 is formed in the base 14 as shown in Fig. 4 was produced. On the other hand, as Working Example 22, as shown in Fig. 5, an antenna in which the magnetic core material 10 and an aluminum board 12a are disposed below a circuit was produced. Further, as Example 23, as shown in Fig. 7, in order to use one sheet of magnetic core material only in a direction with a good property, the magnetic core material 10 was disposed so that it may straddle only one side of a rectangular circuit. Further, as Example 24, as shown in Fig. 8, the magnetic core material 10 was disposed so that it may straddle only a pair of opposite sides of the circuit. Further, as Example 25, as shown in Fig. 9, a coated copper wire was coiled around the magnetic core material 10 such that the magnetization axis may become parallel to a metal surface.

As a result, in Comparative Example 12, a single substance operated normally, but did not operate on a metal. In contrast, in Examples 22 to 25, a single substance operated even on a metal. Accordingly, it was confirmed that an antenna which does not use the magnetic core material 10 does not operate on a metal, but an antenna which uses the magnetic core material 10 of this example can be made to operate even on a metallic article (aluminum board 12a), and an antenna can be made to operate irrespective of the kind of a metallic article if a conductive material (aluminum board 12a) is further disposed to the surface of the magnetic core material 10 to which an article adhere. However, in Examples 22 and 23, the sensitivity of a facing antenna is good in a case where the antenna is on a top face of the figure, and in Working Examples 24 and 25, the sensitivity of the antenna is good in a case where the antenna is on a side face of the figure.

Further, in the configuration of Fig. 5, the sensitivity of an antenna in only a predetermined direction is high. However, as shown in Fig. 6, the magnetic core material 10 is split into several portions, and the respective portions constitute a magnetic core material 10 with a good property in a vertical direction (up-and-down direction of the figure), and a magnetic core material 10 with a good property in a horizontal direction (right-and-left direction of the figure), so that an antenna with a good property can be formed in any portion of a circuit.

In this way, a soft magnetic metal powder having a predetermined particle size (about 1 µm) or less is kneaded with plastic or rubber in a volume ratio of about 10% to 50%, and preferably, in a content of 10% to 40%, and the kneaded composite is subjected to working which extends a composite material in one direction, such as extruding, rolling, rolling after extruding, drawing after extruding, or rolling after injection, or a direct-current magnetic field is applied to a film after the film is coated with ink in which the above powder is suspended in a solvent which has dissolved plastic and before the coated film is dried. As a result, the magnetic permeability can be enhanced, the direction dependency can be given to magnetic permeability, the dimensional accuracy can be improved, and the magnetic core material can be made hard to be damaged even if thin. Further, a high-performance antenna with little leakage of magnetic flux can be manufactured by forming an antenna pattern in one surface of this magnetic core material and disposing a conductive material on the other surface thereof to form an antenna of an RFID tag or reader/writer.

### Industrial Applicability

The dielectric body of the invention can be used not only for antenna applications of an RFID system, but for arbitrary applications which can use a dielectric body with high dielectric constant, such as a high-frequency antenna.

## Claims

1. A magnetic core material comprising a composite material of a soft magnetic metal powder and plastic or rubber,
wherein the soft magnetic metal powder is concatenated by spontaneous magnetization to form a plurality of aggregates, and
the longitudinal direction of each aggregate faces a substantially fixed direction.

2. A magnetic core material comprising a composite material of a soft magnetic metal powder having a diameter of about 1 µm or less and plastic or rubber,
wherein the soft magnetic metal powder is concatenated by spontaneous magnetization to form a plurality of aggregates, and
the longitudinal direction of each aggregate faces a substantially fixed direction.

3. The magnetic core material according to Claim 1 or 2,
wherein the volume ratio of the content of the soft magnetic metal powder is in a range of 10% to 50%.

4. The magnetic core material according to Claim 1 or 2,
wherein the volume ratio of the content of the soft magnetic metal powder is in a range of 10% to 40%.

5. The magnetic core material according to any one of Claims 1 to 4,
wherein the soft magnetic metal powder includes any one of a nickel powder, a cobalt powder, and an iron powder which are obtained by reducing an oxide.

6. The magnetic core material according to any one of Claims 1 to 4,
wherein the soft magnetic metal powder includes any one of a nickel powder, a cobalt powder, and an iron powder by using a gas phase method.

7. The magnetic core material according to any one of Claims 1 to 4,
wherein the soft magnetic metal powder includes any one of a nickel powder, a cobalt powder, and an iron powder which are obtained by reducing a solution containing metallic ions.

8. The magnetic core material according to any one of Claims 1 to 4,
wherein the soft magnetic metal powder includes a carbonyl nickel powder or a carbonyl iron powder.

9. An antenna in which a spiral conductor pattern is formed on one surface of the magnetic core material worked in the form of a plate according to any one of Claims 1 to 8.

10. An antenna in which a spiral conductor pattern is formed on one surface of the magnetic core material worked in the form of a plate according to any one of Claims 1 to 8, and a conductive material is disposed on the other surface of the magnetic core material.

11. The antenna according to Claim 9 or 10,
wherein the plate-like magnetic core material consists of a plurality of magnetic core material pieces in which the longitudinal directions of the aggregates of the soft magnetic metal powder are different from each other.

12. The antenna according to any one of Claims 9 to 11,
wherein the conductor pattern is formed in a rectangular shape, and the plate-like magnetic core material is disposed so as to be overlapped with only one side or two opposite sides of the rectangular conductor pattern, as viewed from a direction orthogonal to a surface of the plate-like magnetic core material.

13. An antenna in which a leading wire is wound around the magnetic core material worked in the form of a plate according to any one of Claims 1 to 8 such that the magnetic axis of the magnetic core material may substantially coincide with the longitudinal directions of the aggregates of the soft magnetic metal powder.

14. The antenna according to any one of Claims 9 to 13,
wherein the antenna is used for an RFID tag or an RFID reader/writer which uses at least a VHF band or a UHF band as a communication frequency.

15. A method of manufacturing a magnetic core material using a composite material of a soft magnetic metal powder and plastic, the method comprising the steps of heating and kneading the soft magnetic metal powder and the plastic, and working the kneaded composite by using any one method of extruding, rolling, rolling after extruding, drawing after extruding, and rolling after injection so that the longitudinal directions of a plurality of aggregates formed by concatenating the soft magnetic metal powder by spontaneous magnetization may face a substantially fixed direction.

16. A method of manufacturing a magnetic core material using a composite material of a soft magnetic metal powder and plastic, the method comprising the steps of applying a direct-current magnetic field after a film is coated with ink in which the soft magnetic metal powder is suspended in a solvent which has dissolved the plastic and before the coated film is dried so that the longitudinal directions of a plurality of aggregates formed by concatenating the soft magnetic metal powder by spontaneous magnetization may be aligned in a substantially fixed direction.
